# EUROPEAN PATENT APPLICATION

(11) **EP 1 826 399 A2**
(43) Date of publication of application: **29.08.2007**
(21) Application number: 07003738.7
(22) Date of filing: 23.02.2007
(51) Int. Cl.: F03B 1/00, F03B 1/04, F03B 11/00, F03B 13/14

(54) **Supply device for a rotor of a water powered machine and a system for the production of electrical energy from wave motion using said device**

(30) Priority: 24.02.2006 IT GE20060024
(71) Applicant: Bruzzone, Riccardo, 15010 Montaldo Bormida AL (IT)
(72) Inventor: Bruzzone, Riccardo, 15010 Montaldo Bormida AL (IT)
(74) Representative: Sergio, Stefano

(57) **Abstract**

A system for the production of electrical current including at least one rotor (2) of a water powered machine or turbo-engine and a generator of electrical current operatively connected to said turbine, said rotor being fed by means of a supply device and at least one feeder pipe (1) of water.
The water inside the feeder pipe (1) is pressurised inside the feeder pipe by means of the expansion of compressed air in said feeder pipe (1), essentially by means of the delivery of compressed air to said pipe and this compressed air expands to the environmental pressure of the feeder pipe and channels at least part of the water of said feeder pipe onto the rotor.

## Description

This invention refers to a rotor supply device of a water powered machine, of the type including at least one feeder pipe to said rotor.

Devices of the aforesaid type are well known and widely used despite the fact that there are certain inconveniences.

A well known supply device is relative to the so called "Pelton turbines".

The Pelton turbine or machine or rotor is used for large falls (greater than 50m) and small capacities (less than 50m³/s), therefore it is usually used for

Alpine hydro-electric reservoirs.

The potential energy of water (U = mgh) accumulated at high altitudes reaches the turbine through forced pipes which channel the water downhill. A nozzle (or more than one) directs the water onto the blades of the Pelton causing it to rotate. Thanks to its shape, the nozzle transforms all the pressure contained in the pipes into kinetic energy (E = 1 / 2mv²), thus the jet on the turbine is not pressurised: for this reason the Pelton turbine is an action turbine.

The supply device is therefore simply a pipe through which the water contained in a reservoir at a high level reaches the rotor of the Pelton turbine itself.

So, in this case, it is necessary to have large falls, in other words great potential energy for the functioning of the Pelton turbine itself, limiting the mounting of such types of machine or rotor typically to Alpine or similar zones, where the difference in height is more easily findable.

The aim of this invention is a supply device for the rotor of a water-powered turbine and at least one feeder pipe for said rotor able to avoid the aforesaid inconveniences in a simple and economical way.

The subject of this invention is a supply device of the type described in the introduction and in which the water in the feeder pipe is pressurised inside the feeder pipe by means of the expansion of compressed air in said feeder pipe, substantially by means of a delivery of compressed air in said pipe; this compressed air expands to the environmental pressure in the feeder pipe and channels at least part of the water in said feeder pipe onto said rotor.

Indeed it has been noted that by expanding compressed air at high pressure inside the feeder pipe, one has an initial moment in which the two fluids do not emulsify due to the different densities of the two fluids, water and air.

In short, by expanding compressed air inside the closed feeder pipe full of water and in particular, delivering compressed air substantially in correspondence with the opposite end of the end associated with the rotor one has a moment, that is a brief period of time, immediately following the delivery of the compressed air, in which the mass of water contained in the feeder pipe moves at great speed towards the end of the pipe opposite the end in which the compressed air was delivered, however maintaining a substantially constant density in this period of initial time.

With the continuation of the delivery of compressed air, the water in the feeder pipe emulsifies with the air and loses its initial density.

Thus, it was decided to use the first moment following the delivery of the compressed air in the delivery pipe that is the moment in which the water mass contained in the feeder pipe moves at great speed towards the opposite end of the pipe to which the compressed air was delivered with a density substantially equal to that of the non-emulsified water, to supply a rotor of a machine.

Indeed, in this first instant the water comes out of the end of the feeder pipe opposite the end in which the compressed air was delivered, at great speed, that is with such kinetic energy as to be exploited for the supply of a rotor flush fitted, for instance, on a generator in such way as to produce electrical energy.

This type of device allows one to generate enough kinetic energy to turn a rotor even when there is no geodetic fall, which is a considerable difference in height.

Essentially, one exploits the immediate expansion of compressed air from the delivery pressure to the environmental pressure of the feeder pipe and the different density of the two fluids (water and air) to generate an acceleration of the water mass and channel it to the rotor.

In a preferred executive form, the feeder pipe essentially includes, in correspondence with the opposite end to the end associated with said rotor, at least one delivery pipe for compressed air and a one-way valve, or similar, suitable to prevent the escape of air and/or water from said feeder pipe in correspondence with the end of the feeder pipe that has said one-way valve.

In other words the pipe is like a tube, open at one end, i.e. the end associated with the rotor, and has a longitudinal development of preferred length. At the end opposite that of the rotor, the pipe has a delivery point for compressed air, identifiable in a feeder pipe of compressed air, and furthermore the pipe is closed or fitted with a one-way valve that does not allow the escape of water or air from the end of the pipe opposite that of the one associated with the rotor.

Compressed air is delivered to the pipe at least partially full of water and, in the instants immediately after the delivery of compressed air, one produces an acceleration of the water mass contained in the pipe, which is thrust violently and rapidly towards the open end of the pipe, which is facing a rotor that is made to rotate by the water that comes out of the pipe at speed.

When the water, after the initial moment, begins to emulsify with the compressed air, also due to the effect of the reduced quantity of water in the pipe, the delivery of compressed air is advantageously stopped and the feeder pipe is once again filled with water, in such way as to be reused.

In a preferred executive form, it is envisaged that at the end of the pipe associated with the rotor, i.e. at the end where the water pushed by the air comes out, there is a nozzle, suitable to channel the water jet onto the blades of the rotor.

Advantageously, it is envisaged that the feeder pipe is positioned at least partially submerged in water and, more particularly, the feeder pipe is positioned with the end including the nozzle, or associated with the rotor in an surfaced condition, while the end including the compressed air delivery pipe and/or the one-way valve, or similar, is positioned in the submerged condition.

In this way it is possible to carry out the filling of the feeder pipe in a simple and economical way: when the delivery of compressed air has finished, the one-way valve present on the submerged end of the feeder pipe allows the entry of the water surrounding the feeder pipe itself, up to the natural levelling off. Essentially the one-way valve allows the passage of water entering the pipe but does not allow the escape of water from the pipe, in such way as to allow the natural filling of the pipe.

An advantageous alternative envisages that inside the feeder pipe there is at least one separator diaphragm, suitable to travel within said feeder pipe like a piston, that is pushed by the compressed air and in turn pushes the water in the feeder pipe towards the end of the pipe associated with the rotor, without permitting the emulsion of the air and water.

In this case the diaphragm shall be free to move like a piston in the feeder pipe and shall be moved by the compressed air delivered in correspondence with one of the two faces of the diaphragm itself. Therefore, the diaphragm moves due to the effect of the expansion of the compressed air and pushes the water mass analogously to that said earlier.

A further subject of this invention is a system for the production of electrical energy including at least one rotor of a water powered turbine and a generator of electrical current operatively connected to said turbine and in which the rotor is supplied by means of a supply device as explained above.

The system, in a preferred solution, comprises of two, three or more rotors supplied by means of a supply device as explained above and also includes a device for the production and storage of compressed air starting from wave motion.

Further characteristics are the subject of the attached claims and sub-claims.

This invention will be more clearly understood making reference to the attached drawings in which:
Figure 1 shows a supply device for a water powered machine according to this invention;
Figure 2 shows a system for the production of electrical energy starting from wave motion according to this invention;
Figure 3 shows a view from above of a system for the production of electrical energy starting from wave motion according to this invention;
Figure 4 shows a system for the production of electrical energy starting from wave motion according to this invention;
Figure 5 shows a diagram of supply for rotors for a system according to this invention.

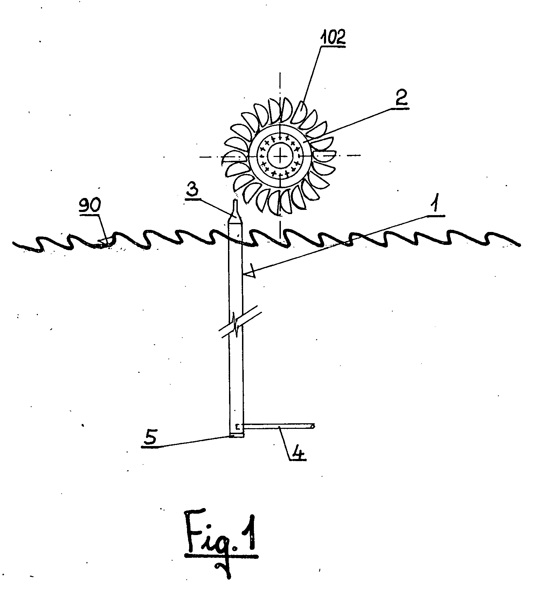

Figure 1 shows a supply device for a rotor 2 of a-water powered machine or turbine engine. In figure 1 one can notice a water feeder pipe 1 for the rotor 2 fitted with blades 102.

According to this invention, the water present in the feeder pipe 1 is pressurised inside the feeder pipe itself by means of the expansion of compressed air inside the feeder pipe 1; this compressed air expands to the environmental pressure of the feeder pipe and channels or pushes at least part of the water of said feeder pipe onto the rotor.

Essentially, one exploits the immediate expansion of compressed air from the delivery pressure to the environmental pressure of the feeder pipe and the different density of the two fluids (water and air) to generate an acceleration of the water mass and channel it to the rotor as described above.

In fig. 1a preferred executive form is illustrated in which the feeder pipe 1 is fitted with a delivery nozzle 3 in correspondence with the end of the pipe 1 associated with the rotor 2.

It is also possible to notice that the feeder pipe, in correspondence with the opposite end to the one associated with the rotor, essentially includes at least: one delivery pipe for compressed air 4 and a one-way valve 5, or similar, suitable to prevent the escape of air and/or water from said feeder pipe 1 in correspondence with the section of the pipe that contains the one-way valve 5, or similar.

In the preferred executive form, the feeder pipe 1 is positioned at least partially submerged in water, and substantially vertical, in particular the feeder pipe 1 is positioned with the end including the nozzle 3 in the surfaced condition, while the end including said compressed air delivery pipe 4 and/or said one-way valve 5, or similar, is positioned in the submerged condition.

In this way it is possible to carry out the filling of the feeder pipe in a simple and economical way: when the delivery of compressed air is finished, the one-way valve 5 present at the submerged end of the feeder pipe 1 allows the entrance of the water surrounding the feeder pipe itself, up to the natural levelling, i.e. to level 90. Essentially, the one-way valve allows the passage of water coming into the pipe, but does not allow the escape of water from the pipe, in such way as to allow the natural filling of the pipe.

The feeder pipe 1 is like a tube, open at one end, i.e. the end associated with the rotor 2, and has a preferred longitudinal development. At the end opposite to that of the rotor 2, the pipe has a point of delivery for the compressed air, identifiable as a compressed air delivery pipe 4, and furthermore the pipe is closed or fitted with a valve 5 that does not allow the escape of water or air from the end of the pipe opposite the one associated with the rotor, in such way that when the compressed air is delivered to the pipe at least partially full of water, in the instants immediately following the delivery of the compressed air an acceleration of the water mass contained in the pipe is produced, and this water is pushed violently and rapidly towards the open end of the pipe fitted with a nozzle 3, which in turn faces a rotor 2 that is made to rotate by the water that comes out of the feeder pipe 1 at high speed.

Alternatively or in combination one could envisage at least two or more delivery nozzles 3 positioned on the feeder pipe 1 and/or on terminal ramifications of said feeder pipe 1, not illustrated.

The delivery of compressed air from the delivery pipe 4 takes place in a propulsive way, i.e. in very short delivery times, of the order of a few seconds at the most, preferably less than a second, and with compressed air at high pressure.

In the figs. from 2 to 4, a system for the production of electrical energy is illustrated including at least one rotor 2 of a water powered turbine and a generator 20 of electrical energy operatively connected to the rotor 2 by means for instance of a transmission shaft 21.

Each rotor 2 is fed by means of a supply device according to this invention illustrated and described with reference to figure 1.

In the case in point, so as to advantageously permit a continuous thrust on the shaft and allow the simultaneous filling of the feeder pipes 1, the system for the production of electrical current according to this invention includes two, three or more rotors 2.

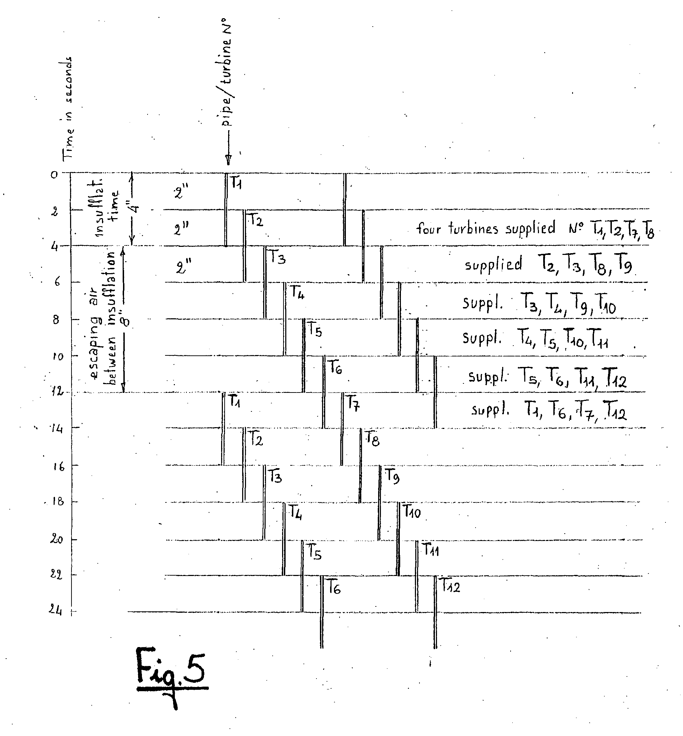

The rotors 2 are each fed by a separate and dedicated feeder pipe 1, and the compressed air is delivered into each feeder pipe alternatively or in combination in progressive and continuous sequences of delivery, common to one or more than one feeder pipe. Essentially one has a delivery of compressed air at the base of the pipes 1 that is not simultaneous for all the pipes, but one has a delivery of compressed air that generates a continuous feeder sequence i.e. for instance, in the case illustrated in fig. 5 for twelve pipes associated with twelve rotors one has a delivery of compressed air that generates a sequence in which each rotor 2 has an active phase, i.e. a phase in which it pushes the shaft 21 alternated with a passive phase, i.e. a phase in which there is the filling with water of the corresponding pipe.

The active and passive phases of the rotors are synchronised in such way as to always have more than one rotor in the active phase that rotates the shaft 21 connected to the generator 20.

Making reference to fig. 5 one sees that there are always, in the case illustrated of twelve rotors, at least one pair of rotors fed in a concordant way, the successive deliveries of compressed air being staggered in time, in such way as to generate a continuous cycle of delivery. At instant 0 there is a delivery of compressed air for the rotors T1 and T7, for two seconds, then at second 2 there is a delivery of compressed air for the rotors T2 and T8 while the delivery continues for the rotors T1 and T7.

At second 4 there is an interruption of the delivery of compressed air for the rotors T1 and T7, which therefore pass to the passive phase and for which begins the filling of the corresponding feeder pipe with new water that goes to replace that flowing out in the four seconds of delivery of compressed air.

Still at second 4 there is the beginning of the delivery of compressed air to the pipes corresponding to the rotors T3 and T9 which therefore begin the active phase, while the delivery of compressed air continues to the pipes corresponding to the rotors T2 and T8.

At second 6 there is an interruption of the delivery of compressed air for the rotors T2 and T8, which therefore pass to the passive phase and for which begins the filling of the corresponding feeder pipe with new water that goes to replace that flowing out in the four seconds of delivery of compressed air.

Still at second 6 there is the beginning of the delivery of compressed air to the pipes corresponding to the rotors T4 and T10 which therefore begin the active phase, while the delivery of compressed air continues to the pipes corresponding to the rotors T3 and T9.

At second 8 there is an interruption of the delivery of compressed air for the rotors T3 and T9, which therefore pass to the passive phase and for which begins the filling of the corresponding feeder pipe with new water that goes to replace that flowing out in the four seconds of delivery of compressed air.

Still at second 8 there is the beginning of the delivery of compressed air to the pipes corresponding to the rotors T5 and T11 which therefore begin the active phase, while the delivery of compressed air continues to the pipes corresponding to the rotors T4 and T10.

At second 10 there is an interruption of the delivery of compressed air for the rotors T4 and T10, which therefore pass to the passive phase and for which begins the filling of the corresponding feeder pipe with new water that goes to replace that flowing out in the four seconds of delivery of compressed air.

Still at second 10 there is the beginning of the delivery of compressed air to the pipes corresponding to the rotors T6 and T12 which therefore begin the active phase, while the delivery of compressed air continues to the pipes corresponding to the rotors T5 and T11.

At second 12 there is an interruption of the delivery of compressed air for the rotors T5 and T11, which therefore pass to the passive phase and for which begins the filling of the corresponding feeder pipe with new water that goes to replace that flowing out in the four seconds of delivery of compressed air.

Still at second 12 there is the beginning of the delivery of compressed air to the pipes corresponding to the rotors T1 and T7 which therefore begin the active phase, while the delivery of compressed air continues to the pipes corresponding to the rotors T6 and T12, with the start of a new cycle that can be repeated for as long as one wishes.

A technician of this sector will be able, with the above mentioned teachings, to envisage other sequences without leaving the protective environment of this invention.

Essentially, the system envisages that many rotors are associated with the same number of corresponding feeder pipes, said rotors being flush fitted on the same axle of a single generator, and a lower number of rotors being in the active phase than the total number of rotors, while in the remaining feeder pipes of the rotors in the passive phase compressed air is not delivered thereby allowing the filling with water of the pipe itself.

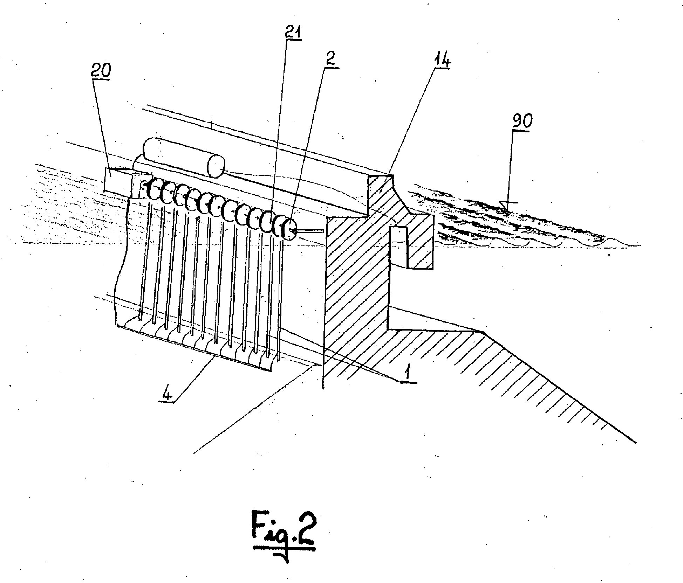

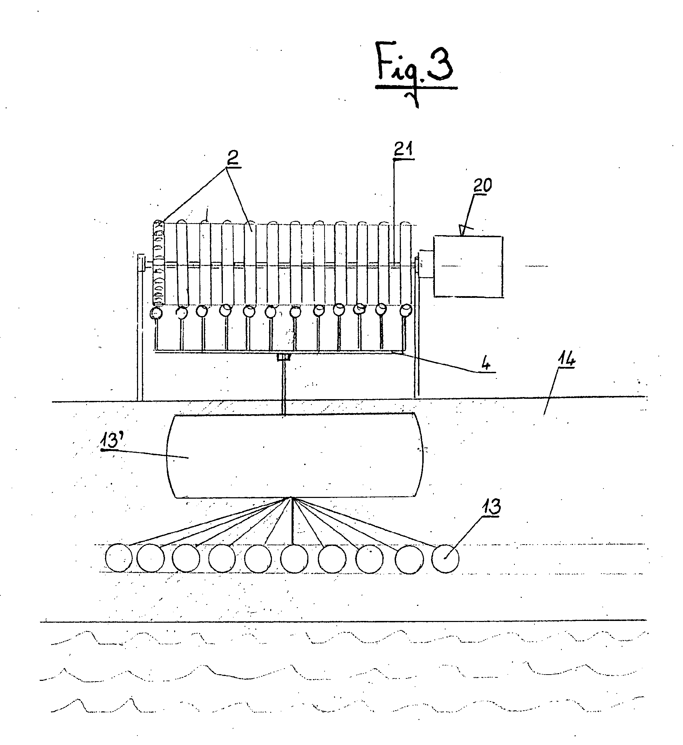

The system according to this invention, making reference to figs. 2, 3 and 4 also advantageously includes a device for the production and storage of compressed air starting from wave motion in such way as to produce a production of compressed air that will then be used according to that said before.

According to an executive example illustrated, the device for the production and storage of compressed air starting from wave motion includes at least: one float 10, an arm of oscillation 11 operatively connected to the float 10 and to a fixed point.

The arm of oscillation 11 is moved by said float oscillating around said fixed point, following the movement of the float due to the wave motion.

Indeed, the float rises and falls following the waves even of small size and drags the oscillating arm into movement.

The oscillating arm in turn moves a pump or compressor 12, for instance volumetric, for the generation of compressed air.

The system advantageously envisages at least one tank 13 for the storage of the compressed air produced by the pump or compressor 12, which can be a single tank or a series of tanks which in turn confer the stored compressed air to a single tank 13'. According to a particularly advantageous executive form, the device for the production and storage of compressed air also includes a structure like a pier or similar 14.

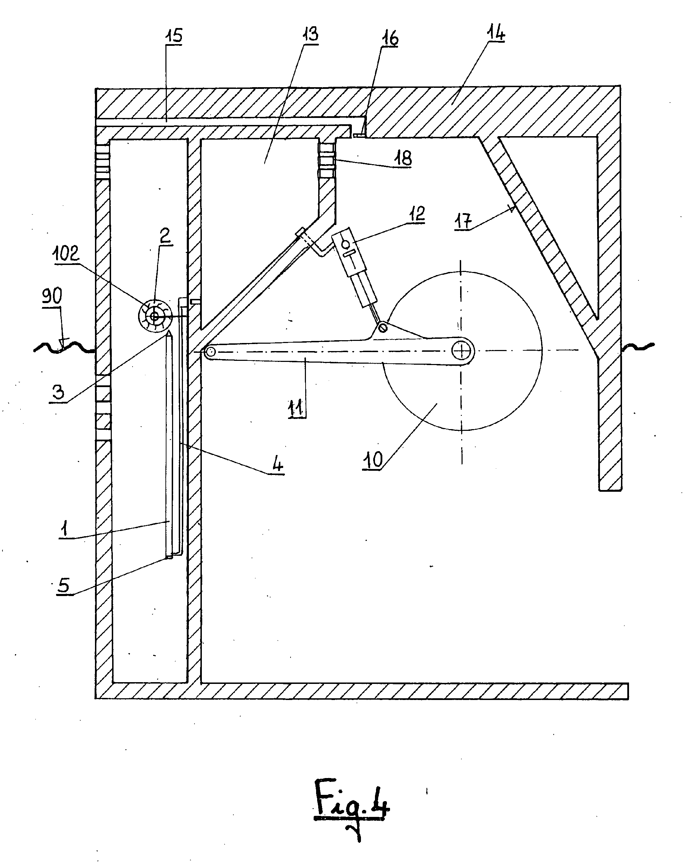

The pier, quay or similar has a compression chamber 17, which is built like an upside down "U" with the opening towards the bottom and with the side walls of said compression chamber that extend at least partially below the sea level as illustrated in fig. 4.

The chamber 17 is fitted with at least one suction pipe 15 for the air from the exterior; this pipe is connected with the outside environment and fitted with a suction valve 16 and/or one-way valve, suitable to allow the entry but not the escape of environmental air in the compression chamber 17.

Advantageously the tank 13 is envisaged as built inside said compression chamber 17 and fitted with at least one inlet valve 18 in communication with the compression chamber 17 itself. The inlet valve 18 is suitable to allow the entry of air put under pressure into said inlet chamber 17 by the wave motion.

Indeed, due to the shape and the layout of the chamber compared to the sea level 90, the waves compress the air inside the chamber 17; this air is introduced into the tank 13 by means of the inlet valves 18. When the wave withdraws, the volume of the compression chamber 17 expands and new air is called into the valve by means of the pipe 15, allowing the next wave to compress the air once again and producing the compressed air necessary for the functioning of the supply device for the rotor. The structure like a pier, quay or similar 14 also includes a delivery pipe 4 for compressed air fitted with at least one valve and/or electro-valve switch for the control of the delivery of compressed air, the delivery pipe for compressed air being connected to the tank 13 and to the base of the feeder pipes 1, as described above.

The system, according to this invention, is therefore an innovative and economical system for the production of electrical energy starting from wave motion, in particular marine wave motion.

At present, the conventional utilisation of bi-directional turbines driven by the air-flow generated by the waves represents a great limit, when the size of the waves is too small the turbine actually pulls power off of generator to stay at operating speed.

During storm conditions, air velocity increases, turbulence develops around the blades and efficiency dramatically decreases.

In essence, the operating tolerance for wave conditions are very narrow with conventional system. In fact the turbines driven by direct air-flow to produce energy use only a small fraction of the extra energy gained to power the pitching system.

The device must be capable of gathering useful energy from a relatively calm sea with wave height of few feet. It must also be able to survive sea conditions where wave heights become very height. In this hostile, salt-laden environment, simplicity and reliability became leading design criteria. The rule of thumb has been, the fewer moving parts the better.

Simple double-acting air pumps able to operate efficiently in any condition grant this basic principle.

An other of the biggest problems is the simple fact that salt water is a highly corrosive substance, especially when in contact with sophisticated mechanical parts as variable-pitch turbines: components life and maintenance cost are to take in consideration.

Furthermore the flexibility of the system is an important feature. Using the air reserve to produce power according to needs is granted by this system.

The last considerable advantage is the modularity of this system able to increase the capacity as we need without any energy absorption. No gears or joints are necessary: a single axle drives the power.

## Claims

1. Supply device for a rotor (2) of a water powered machine, and at least one feeder pipe (1) of water to said rotor **characterised by** the fact that the water in the feeder pipe (1) is pressurised inside the feeder pipe by means of the expansion of compressed air in said feeder pipe (1), essentially by means of the delivery of compressed air to said pipe and this compressed air expands to the environmental pressure of the feeder pipe and channels at least part of the water of said feeder pipe onto the rotor.

2. Supply device according to claim 1, **characterised by** the fact that said feeder pipe (1) is fitted with a delivery nozzle (3) in correspondence with the end of said pipe associated with the rotor.

3. Supply device according to one or more of the previous claims, **characterised by** the fact that said feeder pipe includes essentially in correspondence with the end opposite the end associated with the rotor at least: one delivery pipe of compressed air (4) and a one-way valve (5) or similar, suitable to prevent the escape of air and/or water from said feeder pipe (1) in correspondence with the section of the pipe that has said valve (5).

4. Supply device according to one or more of the previous claims, **characterised by** the fact that said feeder pipe (1) is positioned at least partially submerged in water, on particular said feeder pipe (1) is positioned with the end including said nozzle (3) in the surfaced condition, while the end including said delivery pipe of compressed air (4) and/or said one-way valve (5) or similar, is positioned in the submerged condition.

5. Supply device according to one or more of the previous claims, **characterised by** the fact that two or more delivery nozzles (3) are envisaged positioned on said feeder pipe (1) and/or on terminal ramifications of said feeder pipe (1).

6. Supply device according to one or more of the previous claims, **characterised by** the fact that said delivery of compressed air from said delivery pipe takes place in a propulsive way, i.e. in extremely short delivery times for the compressed air of the order of at most a few seconds, preferably less than one second.

7. Supply device according to one or more of the previous claims, **characterised by** the fact that inside said feeder pipe at least one separator diaphragm is envisaged, suitable to travel inside the feeder pipe like a piston.

8. A system for the production of electrical energy including at least one rotor of a water powered machine or turbo-engine and a generator of electrical current operatively connected to said turbine, **characterised by** the fact that said rotor is fed by means of device according to one or more of the claims from 1 to 7.

9. A system for the production of electrical current according to claim 8, **characterised by** the fact that it includes two, three or more rotors and in which at least one, preferably all the rotors are fed by means of a device according to one or more of the claims from 1 to 7.

10. A system for the production of electrical current according to one or more of the claims from 8 to 9, **characterised by** the fact that it also includes a device for the production and storage of compressed air starting from wave motion.

11. A system for the production of electrical current according to one or more of the claims from 8 to 10, **characterised by** the fact that said device for the production and storage of compressed air starting from wave motion includes at least: a float (10), an arm of oscillation (11) operatively connected to said float (10) and to a fixed point, said arm of oscillation (11) being moved by said float in oscillation around said fixed point, following the movement of said float due to the wave motion, and also including at least one pump or compressor (12) for the generation of compressed air activated by said arm of oscillation (11), and including at least one tank (13) for the storage of the compressed air produced by the pump or compressor (12).

12. A system for the production of electrical current according to one or more of the claims from 8 to 11, **characterised by** the fact that said device for the production and storage of compressed air also includes a structure like a pier or similar (14) having a compression chamber (17), said compression chamber being built like an upside down "U" with the opening facing down and with the side walls of said compression chamber that extend at least partially below the sea level and said chamber (17) is fitted with at least one suction pipe for air (15) from the exterior, said pipe being connected with the outside environment and fitted with a suction valve (16) and/or one-way valve suitable to allow the entrance but not the escape of environmental air in said compression chamber (17), said tank (13) being built inside the compression chamber (17) and fitted with at least one inlet valve (18) in communication with said compression chamber (17), said inlet valve (18) being suitable to allow the entrance of the air put under pressure into said inlet chamber (17) by the wave motion.

13. A system for the production of electrical current according to one or more of the claims from 8 to 12, **characterised by** the fact that said structure like a pier or similar (14) also includes a delivery pipe for compressed air (4) fitted with at least one switch valve and/or electro-valve for the control of the delivery of compressed air, said delivery pipe for compressed air being connected to said tank (13) and to the base of the feeder pipes (1).

14. A system for the production of electrical current according to one or more of the claims from 8 to 13, **characterised by** the fact that it includes more than one rotor (2), each rotor being fed by a separate and dedicated feeder pipe (1), and compressed air being delivered in each feeder pipe alternatively or in combination in progressive and continuous sequences of delivery, shared by one or more of the feeder pipes.

15. A system for the production of electrical current according to one or more of the claims from 8 to 13, **characterised by** the fact that it includes many rotors associated to the same number of feeder pipes, said rotors being flush fitted to the same shaft of a single generator, and a lower number of rotors being in the active phase than the total number of rotors, while in the remaining feeder pipes of the rotors in the passive phase compressed air is not being delivered, allowing the filling with water of the pipe itself.
